# EUROPEAN PATENT APPLICATION

(11) **EP 1 107 472 A2**
(43) Date of publication of application: **13.06.2001**
(21) Application number: 00310605.1
(22) Date of filing: 29.11.2000
(51) Int. Cl.: H04B 5/02

(54) **Digital data transmitting apparatus using inductive coupling**

(30) Priority: 02.12.1999 JP 34288399
(71) Applicant: SONY CORPORATION, Tokyo 141 (JP)
(72) Inventor: Tajima, Shigeru, c/o Sony Corporation, Tokyo 141 (JP)
(74) Representative: Pratt, Richard Wilson

(57) **Abstract**

A digital data transmitting apparatus includes a first information terminal placed on a first block. The first information terminal supplies serial data to a first adapter thereof through a corresponding output end. The first adapter transmits the data by electromagnetic coupling to a first transceiver placed on the first block. The data is transmitted from the first transceiver to a second transceiver placed on a second block through a switch. The second transceiver is connected to a second adapter of a second information terminal placed on the second block by electromagnetic coupling. As a result, the data is transmitted from the first information terminal to the second information terminal using a closed channel.

## Description

### BACKGROUND OF THE INVENTION

### 1. Field of the Invention

The present invention relates in one aspect to a digital transmitting apparatus. An embodiment of the present invention relates to apparatus for transmitting and receiving data. Such an apparatus configures a proximity receiver and a proximity transmitter in proximity to each other.

### 2. Description of the Related Art

Recently, more and more general users have started to perform transmission and reception of digital data as information devices have become widely used. Personal digital assistants (PDAs), portable personal computers, wearable computers, cellular phones, and the like are used to perform transmission and reception of mail and to download and upload content data. In addition, game programs and music information are downloaded using information kiosks at convenience stores. Such transmission and reception of digital data require predetermined adapters and connectors. It is cumbersome to prepare cables in advance and to configure them. It is expected that such cumbersome work will become more noticeable as digital data become distributed more widely among general consumers.

### SUMMARY OF THE INVENTION

Embodiments of the present invention seek to provide technology for easily performing transmission and reception of digital data between users' information terminals when the information terminals are arranged in proximity to each other.

A digital data transmitting apparatus according to an aspect of the present invention includes a receiving unit for receiving a digital signal from a digital signal source. A converting unit converts the digital signal into a signal in a form that is transmittable by inductive coupling between a pair of antennas. A transmitting antenna transmits the signal in the form that is transmittable by inductive coupling. A receiving antenna receives the signal in the form that is transmittable by inductive coupling. A reconverting unit reconverts the received signal in the form that is transmittable by inductive coupling into the original digital signal. An output unit outputs the reconverted digital signal.

The inductive coupling may be implemented by electromagnetic induction or electrostatic induction.

With this arrangement, digital data can be easily transmitted using a pair of antennas arranged in proximity to each other.

A digital data transmitting apparatus according to another aspect of the present invention includes a base and a plurality of digital data transmitting units arranged on the base. Each of the plurality of digital data transmitting units includes a receiving unit for receiving a digital signal from a digital signal source. A converting unit converts the digital signal in a form that is transmittable by inductive coupling between a pair of antennas. A transmitting antenna transmits the signal in the form that is transmittable by inductive coupling. A receiving antenna receives the signal in the form that is transmittable by inductive coupling. A reconverting unit reconverts the signal in the form that is transmittable by inductive coupling into the original digital signal. An output unit outputs the reconverted digital signal.

With this arrangement, a transmission channel can be selected depending on where to arrange information terminals on the base. The transmission channel is used to transmit digital data.

In this arrangement, the base may be furniture, such as a table or the like. The plurality of digital data transmitting units may be covered with a covering for the furniture.

A switch for switching a transmission signal and a reception signal of the plurality of digital data transmitting units may be provided.

The switch may connect the transmission signal and the reception signal of the plurality of digital data transmitting units to a local area network (LAN).

Accordingly, digital data can be easily transmitted using inductive coupling.

### BRIEF DESCRIPTION OF THE DRAWINGS

For a better understanding of the present invention, reference will now be made by way of example to the accompanying drawings in which:
Fig. 1 shows the use of an embodiment of the present invention;
Fig. 2 shows the configuration of transceivers of the present embodiment;
Fig. 3 shows the connection configuration of the transceivers of the present embodiment;
Fig. 4 is a block diagram of one of the transceivers of the present embodiment; and
Fig. 5 is a block diagram of an adapter of an information terminal of the present embodiment.

### DESCRIPTION OF THE PREFERRED EMBODIMENT

The present invention will be better understood from the following description of a preferred embodiment with reference to the accompanying drawings. In the present embodiment, a plurality of transceivers are provided on a table, and these transceivers transmit and receive digital data to and from information terminals.

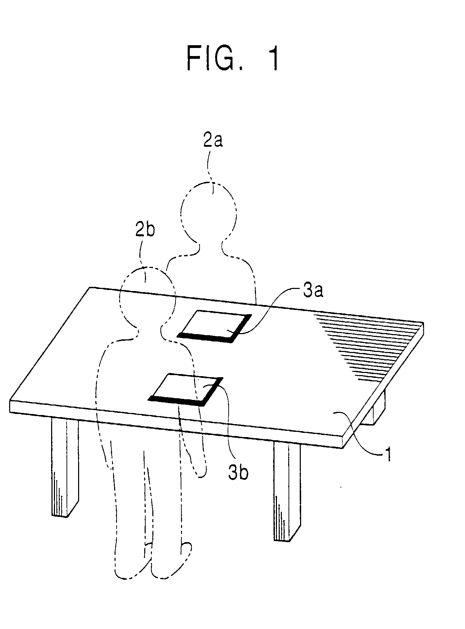

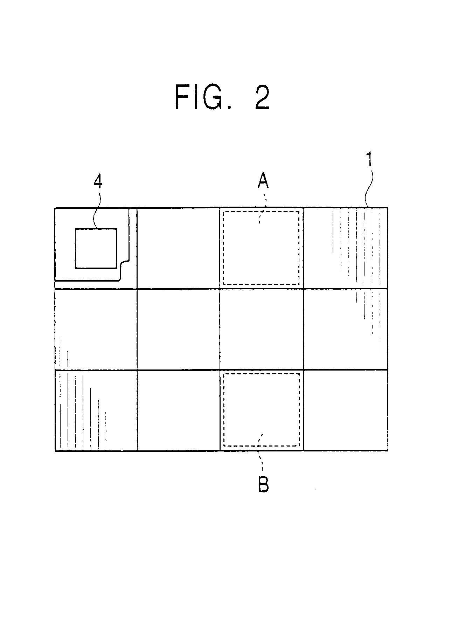

Fig. 1 shows a table 1 used in the present embodiment. Referring to Fig. 1, two users 2a and 2b sit face-to-face with the table 1 provided therebetween. The users 2a and 2b operate information terminals 3a and 3b (collectively referred to as information terminals 3), respectively. The information terminals 3a and 3b are, for example, portable personal computers or personal digital assistants (PDAs). A plurality of transceivers 4 are provided in the table 1, which is described hereinafter with reference to Fig. 2. Data transmission is performed between the information terminals 3a and 3b using these transceivers 4.

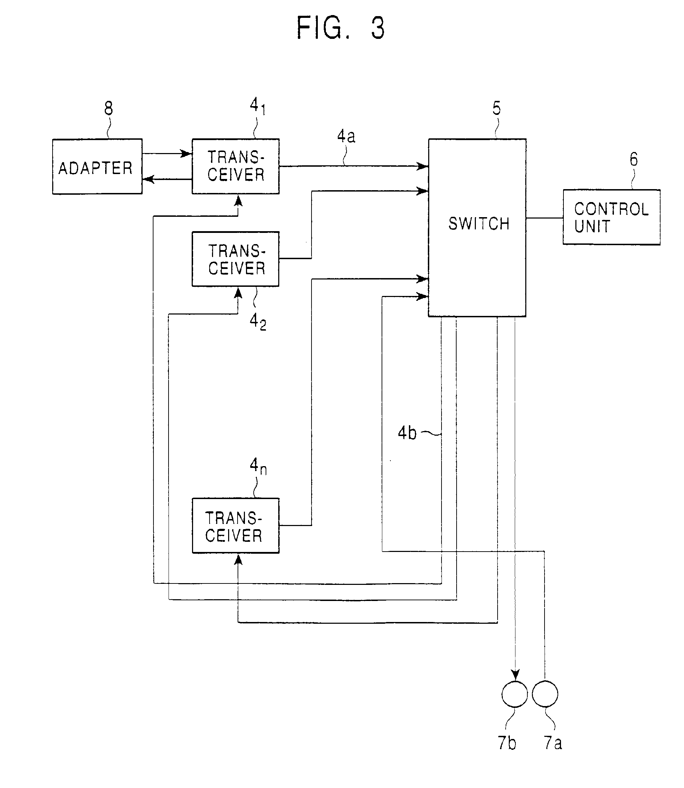

Fig. 2 shows the configuration of the transceivers 4 in the table 1. Referring to Fig. 3, the table 1 is divided into, for example, 12 blocks. Each block is provided with one of the transceivers 4. The transceivers 4 are not exposed at the top surface of the table 1 in order not to detract from the appearance of the table 1. For example, the transmitters 4 are covered with a covering material for the table 1. The transmitters 4 may be arranged so as to be visible from the outside. The top surface of the table 4 may be decorated to indicate each block. Alternatively, block identification (channel identification) or the like may be indicated on the top surface of the table 4.

Fig. 3 shows the connection configuration of the transceivers 4 consisting of individual transceivers 4₁, 4₂,..., and 4ₙ. Referring to Fig. 3, transmission lines 4a of the transceivers 4 are connected to a receiving end of a switch 5. Reception lines 4b of the transceivers 4 are connected to a transmitting end of the switch 5. The switch 5 is formed of, for example, a crossbar switch. The connection state of the switch 5 is controlled by a control unit 6, and an arbitrary one of the transceivers 4 is connected to another arbitrary one of the transceivers 4. A reception terminal 7a and a transmission terminal 7b of an external port are connected to the switch 5. The external port can be connected to a local area network (LAN), a leased circuit, a telephone circuit, or the like through a predetermined interface.

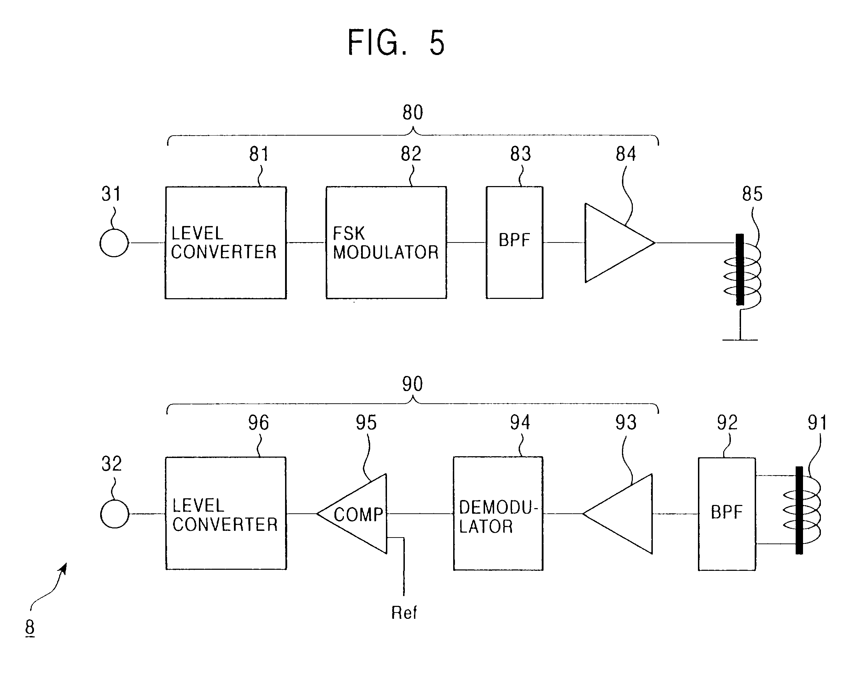

Fig. 5 shows a transmitting and receiving adapter 8 of Fig. 3 provided in the information terminals 3. The adapter 8 can be included in the information terminals 3. Referring to Fig. 5, a transmitting unit 80 of the adapter 8 includes a level converter 81, a frequency shift keying (FSK) modulator 82, a band pass filter 83, a drive amplifier 84, and a transmitting coil 85 with a ferrite core. A data output end 31 of the information terminal 3 is connected to an input end of the level converter 81. The data output end 31 is, for example, an RS-232C interface.

A receiving unit 90 of the adapter 8 includes a receiving coil 91 with a ferrite core, a band pass filter 92, a pre-amplifier 93, an FSK demodulator 94, a comparator 95, a level converter 96, and the like. A data input end 32 of the information terminal 3 is connected to an output end of the level converter 96. The data input end 32 is, for example, an RS-232C interface, a universal serial bus (USB), or an infrared data association (IrDA) connection.

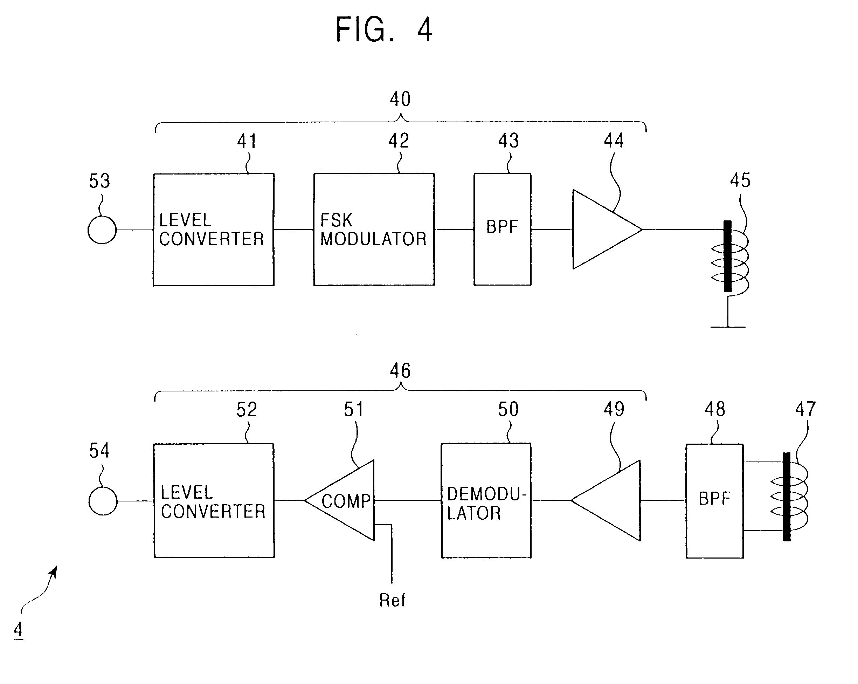

The operation of the adapter 8 shown in Fig. 5 is described hereinafter together with the operation of the transceiver 4 shown in Fig. 4.

Fig. 4 shows the structure of the transceiver 4. Referring to Fig. 4, a transmitting unit 40 of the transceiver 4 includes a level converter 41, an FSK modulator 42, a band pass filter 43, a drive amplifier 44, and a transmitting coil 45 with a ferrite core. An output end 53 of the switch 5 is connected to an input end of the level converter 41.

A receiving unit 46 of the transceiver 4 includes a receiving coil 47 with a ferrite core, a band pass filter 48, a pre-amplifier 49, an FSK modulator 50, a comparator 51, a level converter 52, and the like. An input end 54 of the switch 5 is connected to an output end of the level converter 52.

The operation when data is transmitted between the information terminals 3a and 3b of the users 2a and 2b is described next. The information terminals 3a and 3b are placed on the table 1. The information terminal 3a is arranged on the table 1 at a position corresponding to block A indicated by a broken line in Fig. 2. The information terminal 3b is arranged on the table 1 at a position corresponding to block B indicated by a broken line in Fig. 2. The transceivers 4 corresponding to block A and block B are connected by the switch 5.

Referring to Figs. 4 and 5, serial data from the information terminal 3a is supplied to the adapter 8 through the corresponding output end 31. The serial data is supplied to the level converter 81, and the signal level of the serial data is converted by the level converter 81. Subsequently, the serial data is supplied to the FSK modulator 82 to be FSK-modulated. Carriers are, for example, of frequencies fa and fb, and the carriers correspond to digital signals "1" and "0", respectively. The modulated signal is amplified by the drive amplifier 84 and is supplied to the transmitting coil 85. The transmitting coil 85 is electromagnetically coupled to the transmitting coil 47 of the transceiver 4 placed on block A. Hence, the data can be received by the transceiver 4. Since the transmitting coil 85 is sufficiently separated from the other transceivers 4 on the other blocks, the transmitting coil 85 is not electromagnetically coupled to these transceivers 4.

The modulated signal input through the receiving coil 47 of the receiving unit 46 of the transceiver 4 is supplied through the band pass filter 48 to the pre-amplifier 49, and the supplied signal is amplified. The amplified signal is demodulated by the demodulator 50, and the demodulated signal is shaped by the comparator 51. The level of the shaped signal is converted by the level converter 52, and the converted signal is input to the input end 54 of the switch 5.

The serial data input to the input end 54 of the switch 5 is supplied to the output end 53 selected by the switch 5. The selected output end 53 is connected to the transceiver 4 corresponding to block B on which the information terminal 3b of the user 2b is placed.

The serial data input to the output end 53 of the switch 5 is supplied to the transceiver 4 corresponding to block B. In the transceiver 4, the corresponding modulated signal is supplied to the transmitting coil 45 through the level converter 41, the FSK modulator 42, the band pass filter 43, and the drive amplifier 44.

The transmitting coil 45 is electromagnetically coupled to the receiving coil 91 of the adapter 8 of the information terminal 3b placed on block B. The modulated signal is received by the receiving coil 91, and the received modulated signal is converted into serial data through the band pass filter 92, the pre-amplifier 93, the FSK demodulator 94, and the comparator 95. The level of the serial data is then converted by the level converter 96, and the converted data is input to the input end 32 of the information terminal 3.

Accordingly, the digital data is transmitted from the information terminal 3a to the information terminal 3b. Since the digital data is transmitted by proximity electromagnetic coupling, channels are sufficiently separated from one another.

Digital data is transmitted from the information terminal 3b to the information terminal 3a in a similar manner.

The connection state of the switch 5 can be changed using the control unit 6. This can be performed in a manner similar to that of a general crossbar switch or the like. In this case, the data may be broadcast to the transceivers 4 on the remaining blocks.

By connecting the reception terminal 7a and the transmission terminal 7b of the external port and the information terminals 3 by the adapters 8 and the transceivers 4, a connection can be established with an external communication medium, such as a LAN, a wide area network (WAN), a telephone circuit, or the like, connected to the external port.

As described above, according to the present embodiment, a transmission channel can be assigned to each block. Therefore, data transmission can be performed in a state in which the transmission channel is separated from the other blocks, i.e., the other channels.

The present invention is not limited to the above-described embodiment and includes various modifications included within the spirit and scope thereof. For example, although frequency modulation is performed in the above description, amplitude modulation, baseband modulation, or other various types of modulation can be performed. Although transmission is performed by electromagnetic induction, transmission can also be performed by electrostatic induction. Although the coils with a ferrite core are used, coreless coils can also be used.

## Claims

1. A digital data transmitting apparatus comprising:
receiving means for receiving a digital signal from a digital signal source;
converting means for converting the digital signal into a signal in a form that is transmittable by inductive coupling between a pair of antennas;
a transmitting antenna for transmitting the signal in the form that is transmittable by inductive coupling;
a receiving antenna for receiving the signal in the form that is transmittable by inductive coupling;
reconverting means for reconverting the received signal in the form that is transmittable by inductive coupling into the original digital signal; and
output means for outputting the reconverted digital signal.

2. A digital data transmitting apparatus comprising:
a base; and
a plurality of digital data transmitting means arranged on said base;
wherein each of said plurality of digital data transmitting means includes:
receiving means for receiving a digital signal from a digital signal source;
converting means for converting the digital signal in a form that is transmittable by inductive coupling between a pair of antennas;
a transmitting antenna for transmitting the signal in the form that is transmittable by inductive coupling;
a receiving antenna for receiving the signal in the form that is transmittable by inductive coupling;
reconverting means for reconverting the signal in the form that is transmittable by inductive coupling into the original digital signal; and
output means for outputting the reconverted digital signal.

3. A digital data transmitting apparatus according to Claim 2, wherein:
said base comprises a table; and
said plurality of digital data transmitting means are covered with a covering for the table.

4. A digital data transmitting apparatus according to Claim 2, further comprising a switch for switching a transmission signal and a reception signal of said plurality of digital data transmitting means.

5. A digital data transmitting apparatus according to Claim 4, wherein said switch connects the transmission signal and the reception signal of said plurality of digital data transmitting means to a local area network (LAN).

6. A digital data transmitting apparatus according to any one of Claims 1 to 5, wherein the inductive coupling includes electromagnetic inductive coupling.
